# FASCICULE DE BREVET EUROPEEN

(11) **EP 1 398 249 B1**
(45) Date de publication et mention de la délivrance du brevet: **30.07.2008**
(21) Numéro de dépôt: 03292251.0
(22) Date de dépôt: 12.09.2003
(51) Int. Cl.: B62D 25/12, B62D 65/06

(54) **Support multifonctions pour le positionnement et la fixation d'éléments de carrosserie de véhicule automobile**
Mehrzweckträger eines Karosserieteils mit Befestigungs- und Zentrierungsfunktion
Multi-purpose support for positioning and attaching a body part of a car

(30) Priorité: 13.09.2002 FR 0211366
(43) Date de publication de la demande: 17.03.2004
(73) Titulaire: RENAULT S.A.S., 92100 Boulogne Billancourt (FR)
(72) Inventeur: Mizoule, Roger, 78730 Sainte Mesme (FR); Tetu, Yvon, 92250 La Garenne Colombes (FR)

(56) Documents cités:
- EP-A- 1 138 579
- DE-A- 4 417 380
- JP-A- 2001 334 958
- PATENT ABSTRACTS OF JAPAN vol. 1999, no. 12, 29 octobre 1999 (1999-10-29) & JP 11 180350 A (TOYOTA MOTOR CORP), 6 juillet 1999 (1999-07-06)
- PATENT ABSTRACTS OF JAPAN vol. 1999, no. 12, 29 octobre 1999 (1999-10-29) & JP 11 198862 A (NISSAN MOTOR CO LTD), 27 juillet 1999 (1999-07-27)

## Description

La présente invention concerne un support multifonctions servant à positionner et à fixer sur la structure d'un véhicule automobile différents éléments de la carrosserie avant, tels que les ailes, le capot et la façade avant.

Jusqu'à présent, ces éléments étaient positionnés indépendamment l'un de l'autre sur le référentiel géométrique constitué par la caisse. La fixation se faisait en plusieurs opérations et nécessitait des réglages délicats successifs, à la fois des jeux et de l'affleurement des éléments les uns par rapport aux autres.

Ce mode de montage est fastidieux en raison de la complexité géométrique de la carrosserie, du grand nombre de pièces qui la composent et des réglages en boucle que nécessite leur mise en place correcte. De plus, ce procédé de montage fait intervenir un outillage lourd et coûteux.

Le document résumant la demande JP11198862 divulgue un moyen de montage d'une aile avant de véhicule automobile, dont la position est sécurisée par des moyens de fixation pré positionnés sur la structure du véhicule.

Il est connu par ailleurs de faire reposer le capot, lorsqu'il est en position fermée, et l'aile avant sur des pièces mécaniques formant fusible, c'est-à-dire des pièces qui sont susceptibles de se briser ou de se plier sous l'action d'un choc sur le capot. Grâce à la déformation desdites pièces, le capot et/ou l'aile s'affaissent, ce qui assure un amortissement du choc, par exemple de la tête d'un piéton en cas d'accident. Jusqu'à présent, les pièces fusibles devaient être fixées une par une sur la structure du véhicule, ce qui requerrait beaucoup de temps et une main-d'oeuvre spécialisée.

La présente invention vise à remédier à ces inconvénients de la technique antérieure en proposant un support multifonctions qui permet de simplifier les opérations de fixation des éléments de la carrosserie sur la structure du véhicule, en permettant de les positionner rapidement et à coup sûr à leur emplacement exact où ils sont correctement indexés par rapport aux éléments voisins.

A cet effet, l'invention concerne un support multifonctions pour le positionnement correct et la fixation de différents éléments de la carrosserie avant d'un véhicule automobile, dont le capot et l'aile, sur la caisse tôlerie du véhicule, constitué par une pièce rigide en forme de bande allongée qui comporte une portée inférieure percée d'un trou pilote d'indexage, pour la fixation du support par rapport à la direction transversale et pour la fixation de la traverse avant du véhicule qui porte les projecteurs et la calandre, une patte arrière, percée d'un trou pilote d'indexage, pour la fixation du support par rapport aux directions longitudinale et verticale sur un second élément de structure du véhicule, par exemple le pied avant de la portière, ledit support étant caractérisé en ce qu'il comporte :
une patte d'articulation près de l'extrémité arrière du support, ladite patte portant un axe d'articulation sur lequel s'articule l'extrémité arrière du capot du véhicule, et
au moins deux pontets en forme de U renversé fixés le long du support, de manière à pouvoir y accrocher une aile avant du véhicule tels que sur les pieds du pontet avant est fixée une butée sensiblement horizontale sur laquelle vient reposer le capot lorsqu'il est en position fermée, et tels qu'ils intègrent la fonction de support du capot et d'amortisseur de chocs.

Les pieds des pontets présentent des lignes d'amorce de pliage ou de rupture selon lesquelles ils sont susceptibles de se plier ou de se briser, sous l'action d'un choc qui s'exerce sur le capot, en entraînant l'affaissement du capot et par conséquent l'amortissement du choc.

L'invention sera décrite à présent en regard des dessins annexés, donnés uniquement à titre d'exemple, et dans lesquels :
la figure 1 est une vue en perspective du support multifonctions pour le positionnement d'éléments de carrosserie ;
la figure 2 est une vue en plan de la partie avant du véhicule munie de chaque côté d'un support selon la figure 1 ; et
la figure 3 est une vue en coupe suivant la ligne III-III de la figure 2.

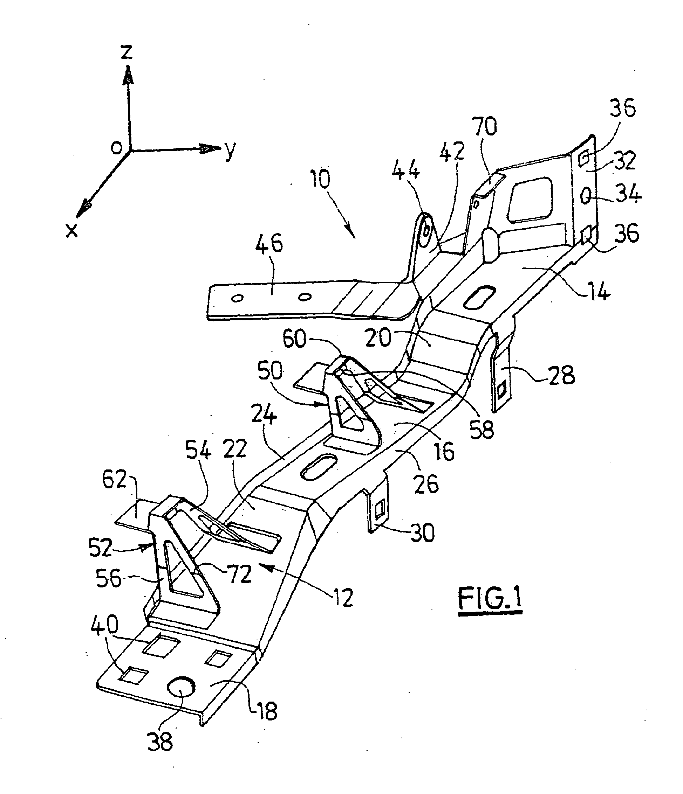

Le support selon l'invention est fixé sur le véhicule avec l'orientation représentée sur la figure 1. Cette orientation est repérée par le système de coordonnées X, Y, Z où X est la direction longitudinale du véhicule, Y est la direction transversale et Z est la direction verticale. Sur la figure 1, l'axe OX est dirigé de l'arrière vers l'avant du véhicule.

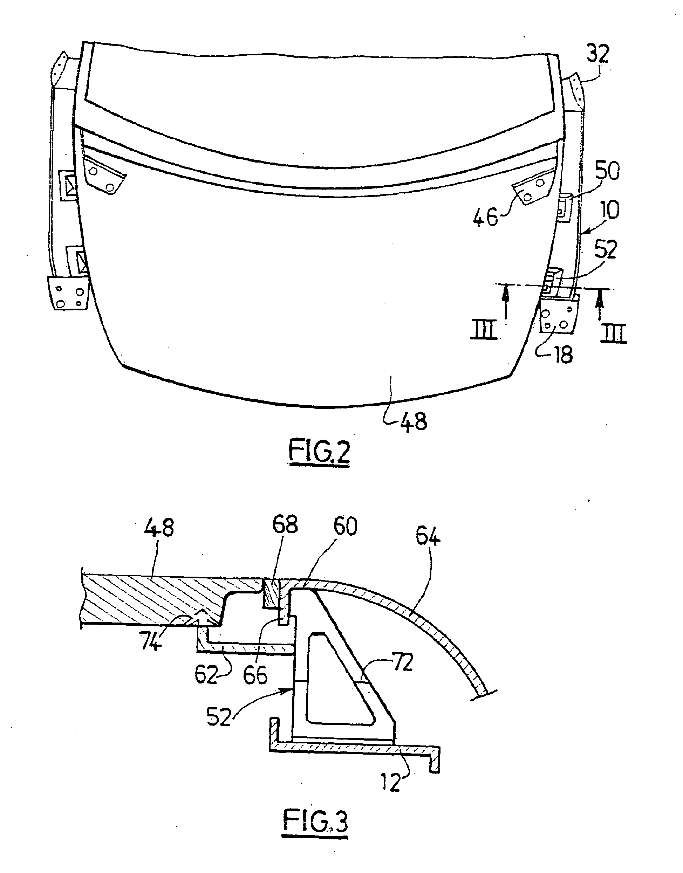

Comme le montre la figure 2; le véhicule est muni de deux supports, l'un sur son aile droite et l'autre sur son aile gauche. Ces supports étant identiques, on n'en décrira qu'un seul.

Avec référence à la figure 1, chaque support 10 est constitué par une pièce sensiblement plate et allongée, qui est réalisée en une matière rigide, par exemple en métal ou en une matière thermoplastique, ou thermodurcissable.

Le support comprend une bande en gradins 12 comprenant une portée supérieure plate 14, une portée centrale plate 16 et une portée inférieure plate 18 qui sont reliées entre elles respectivement par des paliers de raccordement inclinés 20, 22. Le support est bordé le long de ses côtés longitudinaux par un premier rebord replié vers le haut 24 et par un second rebord replié vers le bas 26 qui lui confèrent de la rigidité.

Du second rebord s'étendent vers le bas plusieurs pattes 28, 30 destinées à fixer le support sur un premier élément de structure longitudinal, non représenté, du véhicule.

Le support comporte également une patte arrière 32 percée d'un trou pilote 34 par lequel l'extrémité arrière du support est indexée, au moyen d'une vis, sur un second élément de structure du véhicule, par exemple, le pied avant de la portière, non représenté. La fixation définitive de cette extrémité arrière est effectuée, de façon réglable en X et Z au moyen de vis que l'on visse dans ledit pied avant à travers deux trous surdimensionnés 36, percés dans la patte arrière.

La portée inférieure 18 comporte un trou pilote 38 grâce auquel l'extrémité avant du support est indexée, au moyen d'une vis, sur un troisième élément de structure du véhicule, par exemple une traverse avant, non représentée, qui porte les projecteurs, la calandre, etc.... La fixation définitive se fait de façon réglable en Y au moyen de vis passant à travers des trous surdimensionnés 40 percés sur ladite portée..

Sur le rebord 24 au niveau de la portée supérieure 14 fait saillie une patte d'articulation 42 qui porte un axe d'articulation 44 orienté dans la direction Y. Sur l'axe 44 est articulée une ferrure 46 sur laquelle est fixée la partie arrière du capot 48 du véhicule.

Le support est également muni de plusieurs pontets pour l'accrochage des ailes 64 du véhicule et pour servir de points d'appui pour le capot, comme on l'expliquera en détail par la suite. Dans le mode de réalisation représenté sur la figure 1, le support comporte deux pontets 50, 52, fixés sur la portée centrale 16 et sur le palier de raccordement 22. Chaque pontet est en forme de U renversé et est réalisé à partir d'une bande de matière pliée de manière à former deux pieds 54, 56 reliés par une traverse 58 contenue dans un plan sensiblement perpendiculaire aux plans contenant les pieds. Les pieds sont également reliés à leur extrémité supérieure par des surfaces d'appui 60.

Les pieds sont soudés par leur extrémité inférieure sur les portées 16 et 22, de manière que les plans contenant les pieds soient orientés dans la direction Y et que la traverse 58 soit orientée selon la direction X.

Ainsi, l'aile 64 repose (le long de son côté longitudinal supérieur) sur les deux surfaces d'appui 60 formées sur les pontets. Son extrémité arrière repose sur une troisième surface d'appui 70 formée à l'extrémité arrière du support 10.

Comme le montre la figure 3, le pontet 52 est muni en outre d'une butée 62 sensiblement horizontale fixée sur les pieds, sous la traverse 58. Les butées 62 permettent d'assurer la position et le maintien du capot lors des opérations de peinture, cataphorèse ou de traitement thermique. Il n'est ainsi pas nécessaire d'utiliser une béquille centrale faisant partie intégrante de la palette sur laquelle est montée le véhicule lors de ces opérations.

Les pontets 50 peuvent éventuellement comporter une butée 62. Les butées 62 peuvent être sécables ou servir de point d'appui pour le capot 48, lorsque celui-ci est en position fermée.

L'aile 64 du véhicule comporte un rebord 66 qui vient s'accrocher sur le pontet et qui est fixé sur la traverse 58 au moyen de vis, éventuellement des agrafes, etc..., non représentées. Sur le rebord 66 sont prévues plusieurs cales 68 destinées à maintenir un écart prédéterminé entre l'aile et le capot pendant le traitement thermique de ces derniers et qui sont éliminées après le traitement thermique.

Selon une caractéristique importante de l'invention, une ligne d'amorce de pliage ou de rupture 72 est formée sur chaque pied de chaque pontet, dans la direction Y. En cas de choc, par exemple de la tête d'un piéton sur le capot, les pontets se plient ou se brisent suivant les lignes d'amorce 72, de sorte que le capot s'affaisse. Le choc est de ce fait amorti.

Dans un autre mode de réalisation, le capot et les supports multifonctions 10 gauche et droit sont assemblés de manière à former un ensemble prêt à monter. Cet assemblage est réalisé d'une part au moyen des pièces 42, 44 et 46, la partie arrière du capot 48 étant fixée sur les ferrures 46 tel que décrit plus haut, et d'autre part au moyen d'éléments clipsables 74 fixés sur chaque pontet avant 52 et dont l'extrémité vient se clipser sur la partie avant du capot 58. A titre d'exemple, ces éléments clipsables 74 sont représentés en pointillés sur la figure 3. Ils constituent alors l'extrémité libre de la butée 62. Il sera toutefois compris que ces éléments clipsables 74 peuvent être portés par des éléments intégrés dans le support multifonctions 10, et différents de la butée 62.

L'ensemble capot-support formé est ensuite monté de chaque côté du véhicule, par exemple sur le pied avant des portières et sur la traverse avant.

Ces éléments clipsables 74 permettent d'assurer le positionnement des pièces en partie avant du capot. Ils peuvent être sécables.

L'invention propose donc un support qui permet de faciliter le montage des ailes, du capot et de la façade avant du véhicule, chacun à son emplacement exact et en respectant les mises à niveau et les jeux de chaque élément par rapport à l'autre. Ce montage se fait rapidement, sans tâtonnement et sans l'utilisation d'outillages onéreux. De plus, le support selon l'invention intègre en lui la fonction de support du capot et d'amortisseur de chocs.

## Revendications

1. Support multifonctions (10) pour le positionnement correct et la fixation de différents éléments de la carrosserie avant d'un véhicule automobile dont le capot et l'aile sur la caisse tôlerie du véhicule, constitué par une pièce rigide en forme de bande allongée qui comporte une portée inférieure (18), percée d'un trou pilote (38) d'indexage, pour la fixation du support par rapport à la direction transversale et pour la fixation de la traverse avant du véhicule qui porte les projecteurs et la calandre, une patte arrière (32), percée d'un trou pilote (34) d'indexage, pour la fixation du support par rapport aux directions longitudinale (X) et verticale (Z) sur un second élément de structure du véhicule, par exemple le pied avant de la portière,
ledit support étant **caractérisé en ce qu'**il comporte :
une patte d'articulation (42) près de l'extrémité arrière du support, ladite patte portant un axe d'articulation (44) sur lequel s'articule l'extrémité arrière du capot (48) du véhicule, et
au moins deux pontets (50,52) en forme de U renversé fixés le long du support, de manière à pouvoir y accrocher une aile avant (64) du véhicule tels que sur les pieds du pontet avant est fixée une butée (62) sensiblement horizontale sur laquelle vient reposer le capot (48) lorsqu'il est en position fermée, et tels qu'ils intègrent la fonction de support du capot et d'amortisseur de chocs.

2. Support selon la revendication 1, **caractérisé en ce qu'**il est constitué par une pièce sensiblement plate et allongée comprenant une bande (12) bordée le long de ses côtés longitudinaux par un premier rebord replié vers le haut (24) et par un second rebord replié vers le bas (26) qui lui confèrent de la rigidité.

3. Support selon la revendication 1, **caractérisé en ce que** les pieds des pontets présentent des lignes d'amorce de pliage ou de rupture (72) selon lesquelles ils sont susceptibles de se plier ou de se briser, sous l'action d'un choc qui s'exerce sur le capot (ou sur l'aile) en entraînant son affaissement.

4. Support selon la revendication 1, **caractérisé en ce qu'**il comprend plusieurs pattes latérales (28, 30) pour la fixation du support par rapport à la direction transversale (Y), les pattes latérales (28, 30) étant fixées sur un élément de structure longitudinal du véhicule.

5. Support selon la revendication 1, **caractérise en ce que** la fixation définitive de cette extrémité arrière (32) est effectuée, de façon réglable (en X et Z) au moyen de vis que 1 on visse dans ledit pied avant à travers deux trous surdimensionnés (36), percés dans la patte arrière.

6. Support selon la revendication 1, **caractérisé en ce que** la fixation définitive se fait de façon réglable (en Y) au moyen de vis passant à travers des trous surdimensionnés (40) percés sur ladite portée.

## Claims

1. Multi-function support (10) for the correct positioning and attachment of various elements of the front bodywork of a motor vehicle including the bonnet and wing on the sheet metal body shell of the vehicle, consisting of a rigid part in the shape of an elongated strip which comprises a lower bearing surface (18), pierced with an indexing pilot hole (38), for the attachment of the support relative to the transverse direction and for the attachment of the front cross member of the vehicle that carries the headlamps and the radiator grill, a rear lug (32), pierced with an indexing pilot hole (34), for the attachment of the support relative to the longitudinal direction (X) and vertical direction (Z) on a second structural element of the vehicle, for example the front foot of the door, the said support being **characterized in that** it comprises:
an articulation lug (42) close to the rear end of the support, the said lug supporting an articulation shaft (44) on which the rear end of the bonnet (48) of the vehicle articulates, and
at least two inverted U-shaped holding fixtures (50, 52) attached along the support, so that a front wing (64) of the vehicle can be coupled thereto so that, on the front feet of the holding fixture, a substantially horizontal abutment (62) is attached on which the bonnet (48) rests when it is in the closed position, and so that they incorporate the function of bonnet support and impact absorber.

2. Support according to Claim 1, **characterized in that** it consists of a substantially flat and elongated part comprising a strip (12) bordered along its longitudinal sides by a first upward-folded edge (24) and by a second downward-folded edge (26) which give it rigidity.

3. Support according to Claim 1, **characterized in that** the feet of the holding fixtures have lines (72) for initiating folding or breakage along which they are able to fold or break under the action of an impact on the bonnet (or on the wing) by causing it to crumple.

4. Support according to Claim 1, **characterized in that** it comprises several lateral lugs (28, 30) for the attachment of the support relative to the transverse direction (Y), the lateral lugs (28, 30) being attached to a longitudinal structural element of the vehicle.

5. Support according to Claim 1, **characterized in that** this rear end (32) is finally attached so that it can be adjusted (in the X and Z directions) by means of a screw that is screwed into the said front foot through two oversized holes (36) pierced into the rear lug.

6. Support according to Claim 1, **characterized in that** the final attachment is carried out so as to be adjustable (in the Y direction) by means of screws passing through oversized holes (40) pierced on the said bearing surface.

## Patentansprüche

1. Multifunktionsträger (10) für die korrekte Positionierung und Befestigung verschiedener Elemente der vorderen Karosserie eines Kraftfahrzeugs, d. h. der Motorhaube und des Kotflügels, am Blechwagenkasten des Fahrzeugs, der gebildet ist durch ein starres Teil in Form eines lang gestreckten Bandes, das einen unteren Träger (18) aufweist, durch den ein Indexierungs-Führungsloch (38) verläuft, um den Träger in Bezug auf die transversale Richtung zu befestigen und um die vordere Querwand des Fahrzeugs, die die Scheinwerfer und den Kühlergrill trägt, zu befestigen, und aus einem hinteren Ansatz (32), durch den ein Indexierungs-Führungsloch (34) verläuft, um den Träger in Bezug auf die longitudinale Richtung (X) und die vertikale Richtung (Z) an einem zweiten Strukturelement des Fahrzeugs, beispielsweise der vorderen Basis der Wagentür, zu befestigen,
wobei der Träger **dadurch gekennzeichnet ist, dass** er enthält:
einen Gelenkansatz (42) in der Nähe des hinteren Endes des Trägers, wobei der Ansatz eine Gelenkwelle (44) trägt, an der das hintere Ende der Motorhaube (48) des Fahrzeugs angelenkt ist, und
wenigstens zwei Brücken (50, 52) in Form eines umgedrehten U, die längs des Trägers so befestigt sind, dass hier ein vorderer Kotflügel (64) des Fahrzeugs eingehängt werden kann, derart, dass an den Basen der vorderen Brücke ein im Wesentlichen horizontaler Anschlag (62) befestigt ist, an dem die Motorhaube (48) aufliegt, wenn sie in der geschlossenen Stellung ist, und derart, dass sie die Funktion des Trägers der Motorhaube und des Stoßdämpfers integrieren.

2. Träger nach Anspruch 1, **dadurch gekennzeichnet, dass** er aus einem im Wesentlichen ebenen und lang gestreckten Teil gebildet ist, das ein Band (12) enthält, das längs seiner longitudinalen Seiten durch einen ersten Rand, der nach oben (24) umgebogen ist, und durch einen zweiten Rand, der nach unten (26) umgebogen ist, eingefasst ist, was ihm die Starrheit verleiht.

3. Träger nach Anspruch 1, **dadurch gekennzeichnet, dass** die Basen der Brücken Faltungs- oder Bruch-Ausgangslinien (72) aufweisen, längs derer sie unter der Wirkung eines Stoßes, der auf die Motorhaube (oder auf den Kotflügel) ausgeübt wird und dessen Zusammendrücken nach sich zieht, umgebogen oder abgebrochen werden können.

4. Träger nach Anspruch 1, **dadurch gekennzeichnet, dass** er mehrere seitliche Ansätze (28, 30) für die Befestigung des Trägers in Bezug auf die transversale Richtung (Y) aufweist, wobei die seitlichen Ansätze (28, 30) an einem longitudinalen Strukturelement des Fahrzeugs befestigt sind.

5. Träger nach Anspruch 1, **dadurch gekennzeichnet, dass** die endgültige Befestigung dieses hinteren Endes (32) auf einstellbare Weise (in X- und Z-Richtung) mittels einer Schraube erfolgt, die in die vordere Basis durch zwei überdimensionierte Löcher (36), die in dem hinteren Ansatz ausgebildet sind, geschraubt wird.

6. Träger nach Anspruch 1, **dadurch gekennzeichnet, dass** die endgültige Befestigung auf einstellbare Weise (in Y-Richtung) mittels einer Schraube erfolgt, die durch überdimensionierte Löcher (40), die in dem Träger ausgebildet sind, bewegt wird.
